Europäisches Patentamt

European Patent Office

Office européen des brevets

(19)

(11) Numéro de publication : **0 457 639 A1**

(12) # DEMANDE DE BREVET EUROPEEN

(21) Numéro de dépôt : **91401147.3**

(51) Int. Cl.⁵ : **G06F 15/68**

(22) Date de dépôt : **30.04.91**

(30) Priorité : **15.05.90 FR 9006034**

(43) Date de publication de la demande :
**21.11.91 Bulletin 91/47**

(84) Etats contractants désignés :
**DE FR GB IT**

(71) Demandeur : **THOMSON-TRT DEFENSE
88, rue Brillat-Savarin
F-75013 Paris (FR)**

(72) Inventeur : **Noreve, Xavier
THOMSON-CSF, SCPI, Cédex 67
F-92045 Paris la Défense (FR)**
Inventeur : **Terre, Michel
THOMSON-CSF, SCPI, Cédex 67
F-92045 Paris la Défense (FR)**
Inventeur : **Fety, Luc
THOMSON-CSF, SCPI, Cédex 67
F-92045 Paris la Défense (FR)**

(74) Mandataire : **Turlèque, Clotilde et al
THOMSON-CSF SCPI
F-92045 PARIS LA DEFENSE CEDEX 67 (FR)**

(54) **Procédé de correction d'images issues de capteur provoquant un bruit périodique, et dispositif de mise en oeuvre.**

(57)    L'analyse d'une image du champ d'observation à partir d'une caméra thermique par bandeaux de n lignes provoque l'apparition de rayures ou "lignage" dans certaines zones de l'image, l'ensemble de ces zones constituant un "espace de lignage".

Le dispositif pour la mise en oeuvre du procédé comprend des moyens (13,13') pour déterminer une base de fonctions H et V orthonormées, génératrice d'un espace vectoriel de fonctions dont les valeurs prises, en chaque point de l'image, représentent les valeurs de luminance de tous les types de lignage, des moyens (14,14') pour modéliser le lignage que présente l'image en déterminant les coefficients de répartition de ce lignage sur les fonctions de base, des moyens (15, 15') pour synthétiser le lignage en déterminant les valeurs de luminance du lignage à partir des coefficients de corrélation et des valeurs des fonctions de base, et enfin des moyens (16) pour soustraire les valeurs de luminance du lignage synthétisé des valeurs de luminance de l'image initiale.

EP 0 457 639 A1

FIG.4

La présente invention se rapporte au domaine de la correction d'images issues d'un capteur provoquant un bruit périodique. Elle est plus particulièrement destinée à la correction des défauts de lignage créés dans les caméras thermiques à partir d'un tel capteur et a pour objet un procédé de délignage d'image par traitement adaptatif et un dispositif de mise en oeuvre d'un tel procédé.

La chaîne de visualisation d'images prises à partir d'une caméra thermique comprend les éléments suivants : objectif - module de balayage - système de détection - dispositif de traitement du signal - dispositif de visualisation.

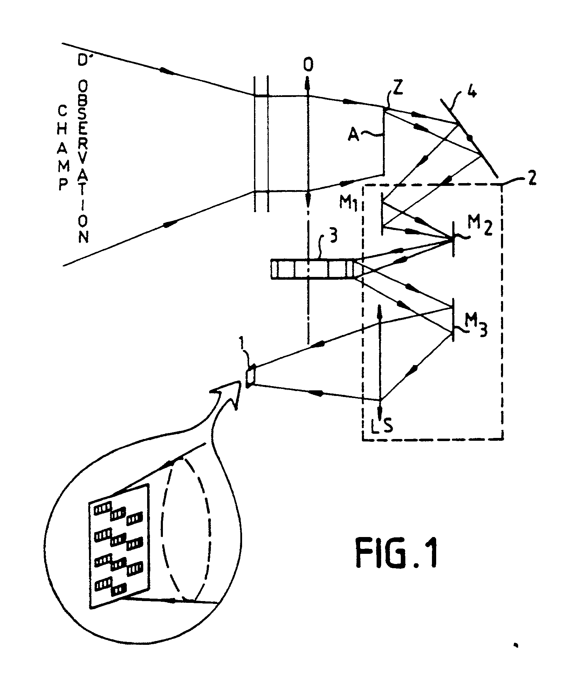

Le système de détection est constitué d'un capteur matriciel en forme de mosaïque bidimensionnelle de n lignes de détecteurs élémentaires, photovoltaïques ou photoconducteurs, refroidies à 77°K pour réduire le bruit thermique au minimum. Sur la figure 1, la mosaïque de détection 1 de la caméra de référence est constituée de n= 11 groupes de 4 cellules élémentaires. Les groupes de cellules de deux lignes successives sont décalées pour des raisons technologiques, l'ensemble des groupes se présentant selon trois colonnes. Cette configuration permet l'analyse d'un pixel par groupe de cellules. Un système optique 2, composé de miroirs (M1,M2,M3) et d'une lentille de sortie LS, projette sur le détecteur 1 une zone élémentaire Z de l'image A formée par l'objectif 0 de la caméra à partir de la scène observée. Cette zone Z décrit le champ d'observation de la caméra grâce à un double balayage :

– un balayage horizontal, engendré par un miroir pyramidal 3 à 12 faces.

– un balayage vertical, effectué à l'aide d'un miroir plan pivotant 4.

L'image, de format 24x36mm² est analysée selon 47 bandeaux de 11 lignes et divisée en 780 pixels par ligne pour 517 lignes utiles (soit 780 pixels sur 11x47 lignes pour la caméra de référence, et plus généralement, Q pixels sur nxP lignes ) .

Du fait de la réponse inhomogène de composants électroniques (préamplificateurs, capacités ou lignes à retard) associés aux cellules détectrices, combinée aux inhomogénéités d'origine optique (variations périodiques de l'axe de visée) et d'origine mécanique ( entraînement du miroir pivotant pour le balayage vertical), des rayures apparaissent sur le dispositif de visualisation traduisant l'effet de "lignage" et ayant les caractéristiques spécifiques suivantes :

– inhomogénéité le long des lignes suivant une courbe de luminance en forme de dôme ;

– inhomogénéité le long des colonnes du haut en bas de l'image ;

– décalage des dômes d'une ligne à la suivante ;

– inhomogénéité de période n lignes sur l'image.

Ces caractéristiques montrent que le défaut de lignage est principalement lié à la structure du système de détection en forme de matrice et au module de balayage associé équipant les caméras thermiques. L'analyse de l'image par bandeaux de n lignes à l'aide d'un tel système provoque sur l'image finale l'apparition de zones dans lesquelles, pour chaque pixel, les valeurs de luminance résultant du défaut de lignage, se superposent aux valeurs de luminance de l'image sans défaut, L'ensemble de ces zones définit un espace de lignage.

Différentes solutions ont été avancées pour supprimer ces défauts de lignage par "délignage" de l'image, en particulier :

– le délignage de YASUOKA (PROCEEDING OF THE 1984 INTERNATIONAL SYMPOSIUM ON NOISE AND CLUTTER REJECTION IN RADARS AND IMAGING SENSORS, edited by T. Suzuki and H. Ogura c IECE 1984), qui consiste à modéliser l'image à partir de l'hypothèse suivante ; la moyenne du niveau de luminance d'une ligne d'image "délignée" peut s'exprimer comme une combinaison linéaire des moyennes des niveaux de luminance d'un bandeau centré sur cette ligne.

– le délignage par défocalisation : la ligne de visée de la caméra est basculée, ou l'objectif est masqué, de façon à faire apparaître une image de lignage pur sur fond de gris uniforme à soustraire à l'image délivrée par la caméra.

De telles solutions ne sont pas satisfaisantes:

– dans le premier cas, le lignage n'est que partiellement atténué et la méthode provoque l'apparition d'un lignage secondaire, sous forme de bavures ou de traînées, du fait de l'interprétation erronée des coupures du continu (correspondant aux variations brutales de luminance dans le paysage).

– dans le second cas, la solution proposée oblige à réactualiser périodiquement la correction à apporter, d'où une interruption périodique d'émission incompatible avec l'utilisation en continu de la caméra.

L'objet de l'invention est d'éviter de tels écueils en proposant un procédé de délignage d'images par traitement adaptatif, en temps réel, destiné à restituer une image corrigée sans apparition de lignage secondaire.

A cet effet, le procédé selon l'invention de correction de lignage d'images issues de capteur provoquant un bruit périodique, le défaut de lignage résultant de l'analyse de l'image par bandeaux de n lignes au moyen d'un détecteur matriciel et provoquant sur l'image l'apparition de zones où, en chaque pixel, les valeurs de luminance dues au défaut se superposent aux valeurs de luminance de l'image, l'ensemble de ces zones constituant un espace de lignage, est caractérisé en ce qu'il comprend les étapes suivantes :

EP 0 457 639 A1

– détermination de l'espace de lignage par identification des valeurs de luminance du lignage aux valeurs prises par les fonctions polynômiales d'un espace vectoriel de fonctions générées par une base de fonctions décorrélées et normées,

– modélisation du lignage sur cet espace de polynômes en déterminant les coefficients de répartition du lignage sur chaque fonction de la base à partir des valeurs de luminance de l'image et des valeurs des fonctions de la base,

– synthèse du lignage en déterminant les valeurs de luminance du lignage à partir des coefficients de corrélation et des valeurs des fonctions de la base, et soustraction du lignage synthétisé de l'image initiale par soustraction des valeurs de luminance de l'image initiale.

L'invention concerne également un dispositif de mise en oeuvre d'un tel procédé.

La présente invention sera mieux comprise et d'autres caractéristiques et avantages apparaîtront à la lecture de la description qui va suivre en référence aux figures annexées qui représentent respectivement :

– la figure 1 (déjà commentée), la structure du module de balayage et du système de détection associé d'une caméra thermique de référence.

– la figure 2, un schéma illustrant le principe de base de l'invention.

– la figure 3, la chaîne de traitement du signal assurant l'accumulation de l'image.

– la figure 4, un premier mode de réalisation du dispositif de mise en oeuvre selon l'invention.

– la figure 5, un second mode de réalisation.

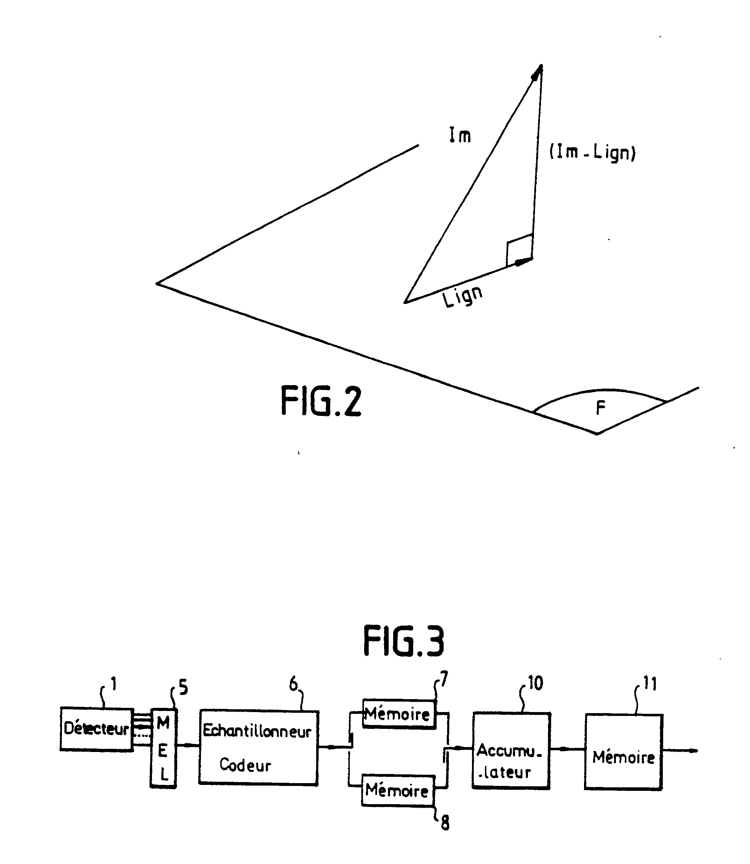

La figure 2 illustre le principe de base sur lequel repose l'invention. Une image Im est représentée par une fonction-vecteur dont les coordonnées sur une fenêtre donnée représentent l'ensemble des valeurs de luminance de cette image (pour la suite, on identifie la fonction-vecteur à l'image Im). Soit E l'espace vectoriel de ces fonctions et F le sous-espace vectoriel de E engendré par l'ensemble des fonctions définissant des images de lignage. Le procédé de l'invention est, à partir de ces définitions, sous-tendu par les objectifs suivants :

– définir un espace de lignage F de tel manière qu'il soit le plus restreint possible, afin de ne pas englober l'image non lignée, et le plus vaste possible afin de contenir tous les types de lignage ;

– extraire le lignage, dénommé Lign sur la figure 2, de l'image Im en projetant l'image Im sur cet espace F ;

– synthétiser le lignage à partir de l'étape précédente et le soustraire de l'image initiale afin d'obtenir une image délignée.

Le procédé selon l'invention s'articule donc autour de trois étapes fondamentales :

– définition d'un espace de lignage.

– modélisation du lignage.

– synthèse et soustraction du lignage modélisé.

En ce qui concerne le premier point, l'espace de lignage est défini au regard des caractéristiques de lignage qui sont physiquement exploitables, à savoir :

– son évolution en forme de dôme en ligne et en colonne.

– son inhomogéniié périodique en ligne (de périodes 11 lignes dans le cas de la caméra thermique de référence, de période n lignes plus généralement).

L'hypothèse retenue, qui intègre analytiquement ces paramètres, est d'identifier le sous-espace vectoriel de lignage et l'espace vectoriel des fonctions :

– polynômiales à valeur en ligne et en colonne : les formes en dôme des valeurs de luminance en ligne et en colonne sont complètement décrites par les combinaisons linéaires d'un ensemble de polynômes de base, respectivement à valeurs en ligne et à valeurs en colonne.

– périodiques : la périodicité horizontale doit se retrouver sur les fonctions en lignes, et en particulier sur les polynômes de base générant ces fonctions. Il suffit donc de définir une base de polynômes en ligne sur un bandeau de n lignes pour que, par reproduction à l'identique (sur 47 bandeaux dans l'exemple illustrant l'invention et plus généralement sur P bandeaux), une base de polynômes en ligne soit défini sur l'ensemble de la fenêtre de visualisation.

– et centrées : afin de conserver la valeur moyenne de luminance de l'image par ligne, lors de l'étape de soustraction ultérieure, il est nécessaire de définir le lignage à partir de polynômes centrés, c'est-à-dire de polynômes dont la valeur moyenne sur une ligne ou sur une colonne est nulle.

La démarche adoptée, suite à ces considérations, est de composer l'espace de lignage par superposition :

– d'un lignage horizontal à caractère périodique qui est défini par P reproductions à l'identique d'un bandeau de n lignes de lignage.

– d'un lignage vertical destiné à pondérer le lignage horizontal afin de prendre en compte l'inhomogénéité verticale des P bandeaux de n lignes du haut en bas de l'image.

Pour traduire cette composition en termes d'espaces vectoriels de fonctions à valeurs en ligne et en colonne, il est nécessaire de choisir une base composée d'une première base de lignage horizontal et d'une

4

seconde base de lignage vertical.

La base de lignage horizontal choisie se compose de:

– n polynômes centrés de degré 0 (générant les polynômes constants) et dénommés ($B_1$, $B_2$;... ; $B_i$ ; ... ; $B_n$).

Ces polynômes $B_i$ sont tels que :

– $B_i = 1$ pour chaque point de la ligne i, i allant de 1 à n.

– $B_i = -1$ pour chaque point de la ligne n.

– $B_i = 0$ sur toutes les autres lignes.

La matrice B suivante résume les valeurs prises par les vecteurs de base des polynômes constants :

$$B = \begin{pmatrix} B_1 & B_2 \cdots B_i \cdots B_{n-1} & B_n \\ 1 & & \\ & 1 & \\ & \cdots & 0 \\ 0 & \cdots & \\ & & \ddots 1 \\ -1 & -1 \cdots -1 \cdots -1 & 0 \end{pmatrix} \qquad \text{Tableau 1}$$

Le polynôme $B_n$ étant identiquement nul, l'espace des polynômes constants et centrés est bien décrit par n-1 polynôme ($B_1$ , ... ; $B_{n-1}$) comme on aurait pu le prévoir (perte d'un degré de liberté du fait de leur centrage).

– (n-1)p polynômes centrés de degré 1 à p, générant les polynômes centrés en lignes. Ces polynômes de base s'écrivent à partir des polynômes $B_i$ précédents de la manière suivante :

$$B_1 X \; ; \ldots, \; B_i X \; ; \ldots; \; B_{-1} X$$

$$B_1 X^2 \; ; \ldots; \; B_i X^2 \; ; \ldots; \; B_{n-1} X^2$$

$$\ldots\ldots\ldots\ldots\ldots\ldots\ldots\ldots\ldots\ldots \qquad \text{Tableau 2}$$

$$B_1 X^j \; ; \ldots; \; B_1 X^j \; ; \ldots; \; B_{n-1} X^j$$

$$B_1 X^p \; ; \ldots; \; B_i X^p \; ; \ldots; \; B_{n-1} X^p$$

La base de lignage vertical est définie à partir de polynômes centrés de degré 1 à q rapportés au précédents pour générer les polynômes centrés en colonne ; ils se composent de (n-1)q polynômes définis à partir des n-1 polynômes de degré 0, ayant une expression du type $B_j Y^k$, mais également de (n-1) pq polynômes définis à partir des (n-1)p polynômes du tableau 2 et ayant une expression du type $B_k X^i Y^j$. Le nombre de polynômes de base en colonne est donc de (n-1)(p+1)q.

En résumé, la base de lignage horizontal générant l'espace de lignage horizontal contient (n-1) + (n-1) p = (n-1). (p+1) polynômes et la base générant l'espace de lignage complet, horizontal et vertical, contient un nombre total de polynômes égal à :

$$(n-1) (p + 1) + (n-1) (p + 1) q = (n-1) (p + 1) (q + 1)$$

Les expressions analytiques des polynômes de base en X et en Y sont déterminées, en fonction des variables en lignes et en colonnes respectivement x et y, de façon à former une base orthonormée de fonctions décorrélées et normées. Ce choix est justifié par la simplification des calculs ultérieurs qu'il engendre.

La décorrélation est obtenue grâce à l'algorithme de décorrélation classique de Cholesky et la normalisation par division par leur variance : la fonction x est décorrelée de la fonction 1, puis la fonction $x^2$ des fonctions 1 et x' (x décorrélé de 1) et ainsi de suite. Cette opération est effectuée une fois pour toutes et n'affecte pas la charge de calcul.

Une base de fonctions (f; f'; f''; . . . ; $f^{(k)}$ ; . . . ) ou ($f^{(k)}$) est ainsi définie. Elle se compose :

– de fonctions normées générant le lignage horizontal et formant une premièree base ($f_H^{(i)}$ ) ; ces fonctions, à valeurs sur chacune des n lignes, sont décorrélées entre elles pour tous les points j, j variant de 1 à Q, de chaque ligne ;

– de fonctions normées générant le lignage vertical et formant une seconde base $(f_V^{(k)})$ ; ces fonctions, à valeurs sur les Q colonnes toutes les n lignes, sont donc décorrélées entre elles toutes les n lignes, c'est-à-dire pour les points i modulo n, i variant de 1 à nP (par exemple, les fonctions décorrélées sur les lignes 1 modulo n forment une première série, etc. . . ). Cette décorrélation en "nième" traduit la définition donnée au lignage vertical à partir de la définition du lignage horizontal.

La modélisation du lignage réel fait l'objet de la seconde étape du procédé. Cette modélisation se décompose en une modélisation du lignage horizontal et en une modélisation du lignage vertical, par recherche des coefficients de répartition, ou coefficients de corrélation, ou coordonnées du lignage horizontal (respectivement vertical) sur chaque fonction de la base $(f_H^{(k)})$ à valeurs sur n lignes (respectivement sur la base $(f_V^{(k)})$ à valeurs toutes les nièmes lignes des Q colonnes ).

Avant de décrire les opérations permettant d'aboutir à cette modélisation, une approche formaliste est présentée afin de justifier le bien-fondé de ces opérations et de leur enchaînement. En référence à la figure 2, il apparaît que le lignage Lign peut être atteint en projetant orthogonalement l'image Im sur l'espace de lignage. En remarquant alors que le lignage Lign est tel qu'il rend minimale le module (Im-Lign), il est possible de modéliser le lignage réel sur l'espace vectoriel précédemment défini à partir :

– des valeurs de luminance de l'image Im ;

– de la base centrée $(f^{(k)})$ composée des deux bases $(f_H^{(k)})$ et $(f_V^{(k)})$ génératrices de l'espace vectoriel de lignage horizontal et vertical.

Pour accéder à la décomposition du lignage sur cette base $(f^k)$ à partir de la décomposition sur cette même base des valeurs de luminance de l'image Im, il ressort des remarques précédentes qu'il suffit de minimiser la quantité (Im-Lign). Dans ce but, la voie suivie est de minimiser cette quantité, au sens des moindres carrés, en recherchant le vecteur Lign de l'espace de lignage qui vérifie que (Im-Lign)$^2$ est minimal, à partir d'un nombre suffisant de valeurs de luminance.

En raisonnant, dans un premier temps, sur la base des polynômes constants en ligne et centrés $(B_i)$, il est aisé de saisir le mécanisme qui va permettre d'accéder aux coordonnées $\theta_i$ du lignage constant L tel que :

$$ L = \sum_i \theta_i \, B_i $$

soit $\theta$ la matrice des coordonnées du lignage L, I la matrice des coordonnées de l'image sur l'espace de lignage, et B la matrice de passage des polynômes de base. Selon la procédure annoncée, il convient alors de rechercher $\theta$ tel que l'espérance mathématique E(I-$\theta$B)$^2$ soit minimale.

Pour ce faire il suffit d'annuler la dérivée de cette expression :

$$ 2E(I-\theta B)\, B^t = 0 $$

il en résulte :

$$ \theta = (BB^t)^{-1} E(B^t I) \qquad \text{formule I} $$

E(I) représente les moyennes des valeurs de luminance de l'image rapportées à la base de l'espace de lignage. Cette expression peut s'écrire :

$$ \begin{pmatrix} \bar{I}_1 \\ \vdots \\ I_i \\ \vdots \\ \bar{I}_n \end{pmatrix} $$

avec $\bar{I}_i$ = moyenne de la valeur de luminance de l'image sur la ième ligne rapportée au polynôme de base $B_i$.

En remplaçant E(I) par son expression limitée à l'ordre 11 et B par celle développée au tableau 1, il vient :

$$E(B^tI)= \begin{pmatrix} \bar{I}_1-\bar{I}_{11} \\ \ldots\ldots \\ \bar{I}_{10}-\bar{I}_{11} \end{pmatrix} \quad \text{et } (BB^t)^{-1}= \frac{1}{11} \begin{pmatrix} \begin{smallmatrix} 10 & & & & \\ & & & -1 \\ & & & \\ -1 & & & \\ & & & 10 \end{smallmatrix} \end{pmatrix}$$

La simplicité de l'écriture de $(BB^t)^{-1}$ justifie, a posteriori, l'utilisation d'une base de fonctions orthonormées.

Il résulte des expressions précédentes que la coordonnée du lignage $\theta i$ sur la ième ligne est fournie, en partant de la formule I, par l'expression :

$$\theta_i=\frac{1}{11} \ [-(I_i-I_{11}) - (I_2-I_{11}) - \ldots +10(I_i-I_{11}) - \ldots -(I_{10}-I_{11})]$$

soit

$$\theta_i = \bar{I}_i - \frac{1}{11}\sum I_i \qquad \text{formule II}$$

Ainsi, chaque coordonnée de lignage, sur l'espace vectoriel de lignage des polynômes constants en ligne et centrés, est égale à la moyenne de luminance de l'image sur la ligne correspondante diminuée de la moyenne de la luminance de l'image sur l'ensemble des lignes.

En généralisant sur l'espace vectoriel de lignage des fonctions centrées en ligne et en colonne, rapportée à la base orthonormée $(f^{(k)})$, la formule II devient :

$$\theta_i^{(k)} = M_i^{(k)} - M_H^{(k)}$$
$$\text{et } \theta_j^{(k)} = M_j^{(k)} - M_V^{(k)}$$

pour les coefficients de corrélation du lignage horizontal (respectivement vertical) rapportés à la base $(f_H^{(k)})$ ( respectivement $f^{(k)}_V$).

Dans ces expressions, $M_i^{(k)}$ (respectivement $M_j^{(k)}$) représente la moyenne des coefficients $a_{ij}$ de la luminance d'un point $(i,j)$, situé sur la ième ligne et jième colonne, de l'image sur les Q pixels de la ième ligne (respectivement sur les nP pixels de la jième colonne) :

$$M_i^{(k)} = \frac{1}{Q}\sum a_{ij}$$

$$M_j(k) = \frac{1}{nP}\sum a_{ij}$$

Les coefficients $a_{ij}$ sont immédiatement accessibles par le rapport de luminance de l'image $I_{ij}$ et de la valeur de la fonction f(k) au point considéré, d'où :

$$M_i^{(k)} = \frac{1}{Q}\sum_j I_{ij}/f^{(k)}_{(j)}$$

et

$$M_j^{(k)} = \frac{1}{nP}\sum_i I_{ij}/f^{(k)}_{(i)}$$

Enfin, $M_H^{(k)}$, (respectivement $M_V^{(k)}$) est égal à la moyenne des $M_i^{(k)}$ (respectivement $M_j^{(k)}$) de l'espace de lignage horizontal sur l'ensemble des n lignes (respectivement sur l'ensemble des Q colonnes de l'espace de lignage vertical) :

$$M_H^{(k)} = \frac{1}{n} \sum M_i^{(k)}$$

et

$$M_V(k) = \frac{1}{Q} \sum M_j(k)$$

Il ressort de ce qui précède que, pour couvrir la deuxième étape du procédé de l'invention, à savoir la modélisation du lignage, la suite des opérations suivante est effectuée :

– détermination de la base des fonctions polynomiales décorrélées et normées qui génèrent l'espace de lignage selon la procédure adoptée. Il est possible de limiter cette base aux seules fonctions centrées en ligne : l'espace de lignage considéré est alors limité au lignage horizontal qui est, de fait, le plus visible. Mais cette base peut être élargie aux fonctions centrées en colonne et l'espace de lignage considéré est alors complet ;

– mémorisation de l'image complète : pour la modélisation du lignage complet, il est nécessaire de mémoriser l'ensemble des valeurs de luminance de l'image puisque la modélisation du lignage vertical concerne l'ensemble de l'image. L'accumulation de l'image, destinée à la modélisation du lignage horizontal, est alors opérée à partir de cette mémoire d'image ;

– accumulation de P bandeaux de n lignes de l'image sur un bandeau de n lignes : cette accumulation permet d'amplifier les effets "en dôme" du lignage horizontal par rapport au bruit de fond ;

– détermination des coefficients de corrélation du lignage $\theta_i^{(k)}$ (et respectivement $\theta_j^{(k)}$) sur chaque fonction de la base ($f^{(k)}$) et pour chacune des lignes i (et respectivement des colonnes j) par différence entre les moyennes $M_i^{(k)}$ et $M_H^{(k)}$ (respectivement $M_j^{(k)}$ et $M_V^{(k)}$). Selon que la base ($f^{(k)}$) comporte les seules fonctions élémentaires en ligne ($f_H^{(k)}$) ou l'ensemble des fonctions en ligne et en colonne ($f_H^{(k)}$, $f_V^{(k)}$) la modélisation concernée est celle du lignage horizontal ou du lignage complet.

Les coefficients de corrélation du délignage horizontal, déterminés à partir de l'image condensée, sont à diviser par P et à recopier P fois pour fournir des coefficients $\theta_i^{(k)}$ exploitables dans l'étape de synthèse du lignage horizontal.

La troisième étape consiste précisément à synthétiser le modèle de lignage horizontal ou complet défini précédemment à l'aide des coefficients $\theta^{(k)}$, respectivement $\theta_i^{(k)}$ et $\theta_j^{(k)}$, sur les fonctions de base $f^{(k)}$, puis à soustraire l'image de lignage synthétisé de l'image initiale.

Pour créer l'image de lignage horizontal, il convient de définir la valeur de luminance $\lambda_{ij}$ de chaque pixel (i, j) de la ième ligne modulo n et jième colonne, i variant de 1 à nP et j de 1 à Q. Chaque fonction élémentaire de la base de lignage horizontal $f_H^{(k)}(j)$ contribue au lignage en ce point avec un coefficient égal à la coordonnée du lignage sur cette fonction, soit $\theta_i^{(k)}$ ; ainsi

$$\lambda_{ij} = \sum_k \theta_i^{(k)} f_H^{(k)}(j)$$

Pour créer l'image de lignage complet, il est nécessaire d'ajouter la composante de luminance due au lignage vertical : chaque fonction $f_V^{(k)}$ de la base de lignage Vertical, à valeurs sur les ièmes lignes modulo n, contribue également au lignage du point (i, j) à l'aide de son coefficient $\theta_j^{(k)}$ ; la valeur de luminance du lignage complet a donc pour expression :

$$\lambda_{ij} = \sum_k \theta_i^{(k)} f_H^{(k)}(j) + \sum_k \theta_j^{(k)} f_V^{(k)}(i)$$

La mise en oeuvre du procédé de l'invention peut revêtir deux formes bâties selon le même principe, selon qu'est réalisée une carte de délignage horizontal ou de délignage complet.

En particulier, ces deux formes font intervenir une chaîne de traitement propre à assurer l'accumulation de l'image, et donc du lignage sur un bandeau de 11 lignes (plus généralement n lignes ). Le lignage horizontal, concentré, modélisé et synthétisé selon le procédé de l'invention, est défini sur ce même bandeau. La figure 3 représente le schéma de cette chaîne de traitement. Un module électronique linéaire (MEL) 5 reçoit chacun des 11 signaux provenant des 11 groupes des 4 cellules déctectrices formant la mosaïque de détection pour les préamplifier et les synchroniser. La sortie du module 5 est appliquée à un échantillonneur 6 qui échantillonne et numérise chaque signal par tout procédé numérique connu. La donnée de luminance est alors stockée dans l'une des mémoires vives 7 ou 8 pendant que la valeur mémorisée dans l'autre est lue en 64 microsecondes. Les valeurs lues successivement dans les mémoires 7 et 8 sont transmises à un accumulateur 10 apte à additionner sur 11 lignes les 47 bandeaux de valeurs de luminance correspondant à un balayage complet du champ de vision. Ces valeurs sont stockées dans une mémoire 11 de capacité adaptée.

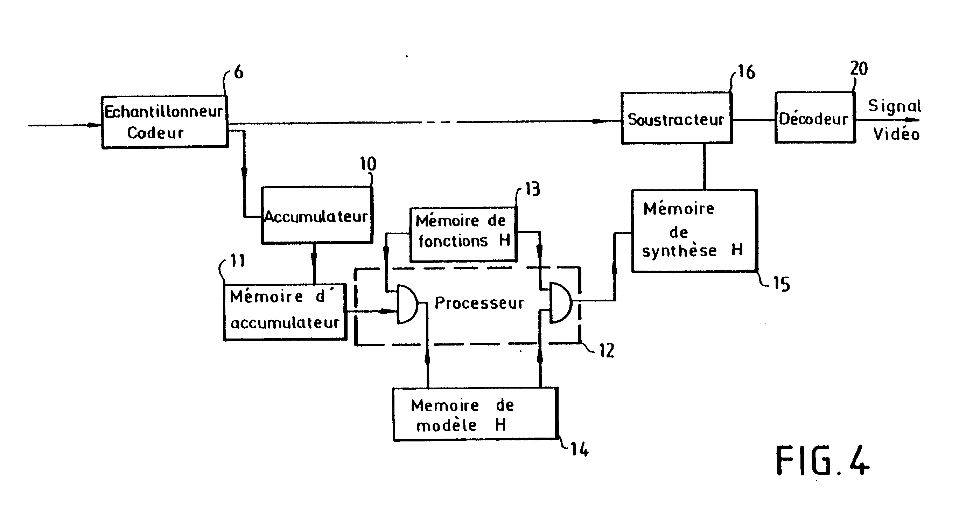

Le dispositif mettant en oeuvre le seul délignage horizontal est illustré à la figure 4 : cette mise en oeuvre est organisée autour d'un processeur de signal central 12 qui, dans un premier temps, calcule les fonctions orthonormées de la base de lignage horizontale ($f^{(k)}_H$) selon le procédé exposé. Les valeurs de ces fonctions, stockées dans une mémoire 13, sont successivement adressées au processeur 12 pour qu'il détermine, à partir de ces valeurs $f^{(k)}_H(j)$, j variant de 1 à Q, et des valeurs de luminance $I_{ij}$ fournies par la mémoire de l'accumulateur 11, les valeurs des coefficients de corrélation $\theta^{(k)}_i$ du modèle de lignage horizontal. Ces valeurs $\theta^{(k)}_i$, après division par P (P = 47 pour la caméra de référence), sont stockées dans une mémoire 14. Cette mémoire 14 adresse alors successivement au processeur 12 des coefficients permettant de déterminer les valeurs de luminance $\lambda_{ij}$ du lignage horizontal synthétisé, par combinaison avec les fonctions $f_H^{(k)}(j)$. Les valeurs $\lambda_{ij}$ sont stockées dans une mémoire de synthèse 15 sur n lignes (11 lignes pour la caméra de référence). Enfin, un soustracteur 16 permet de soustraire, de manière synchronisée, aux valeurs de luminance de l'image, échantillonnées et numérisées sur n lignes, les valeurs de luminance du lignage horizontal synthétisé stockées dans la mémoire 15. Les valeurs de luminance de l'image délignée sont transformées en signal vidéo par décodage à travers le décodeur (20).

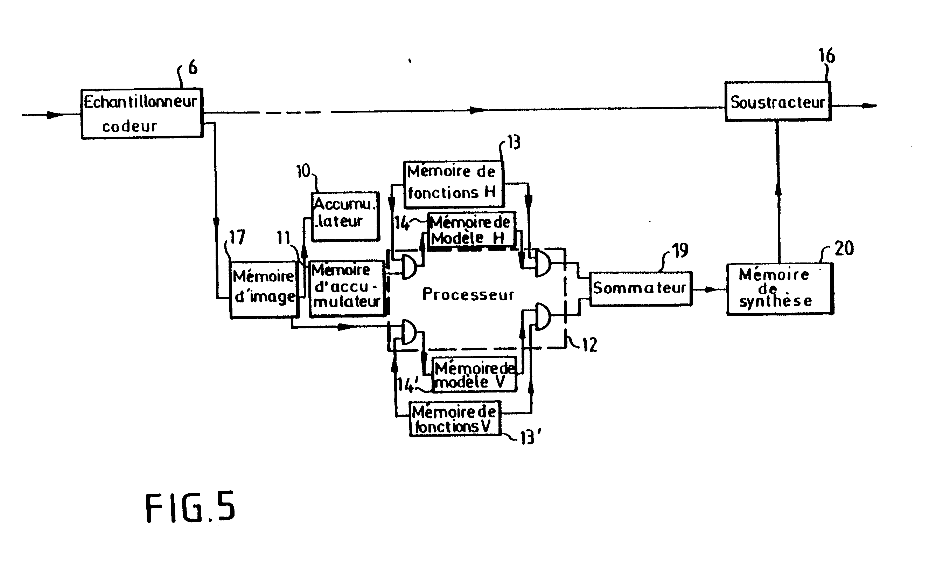

Le dispositif de mise en oeuvre du procédé de délignage complet est décrit en référence à la figure 5 : il comporte une chaîne de traitement identique au dispositif précédent en ce qui concerne le délignage horizontal jusqu'à la mémoire de synthèse. Cependant, les valeurs de luminance d'une image, déterminées par l'échantillonneur-codeur, sont d'abord démultiplexées pour créer deux voies d'adressage, dont une voie de délignage horizontale par stockage initial de ces valeurs de luminance dans la mémoire d'accumulateur 11.

En ce qui concerne le délignage vertical, les coefficients de corrélation $\theta^{(k)}_i$ du modèle de lignage vertical sont stockées dans une mémoire 14' après avoir été déterminées par le processeur 12 par adressage séquentiel des valeurs de luminance fournies par la mémoire d'image 17 par démultiplexage et les valeurs des fonctions de la base de délignage vertical ($f_V^{(k)}(i)$, i variant de 1 à nP modulo n, stockées dans une mémoire 13'. Les valeurs de luminance du lignage vertical synthétisé sont alors déterminées par adressage séquentiel des coefficients du modèle de lignage vertical stockés dans la mémoire 14' et des valeurs des fonctions $f_V^{(k)}(i)$ fournies par la mémoire 13'. Les valeurs de luminance du lignage horizontal synthétisé, recopiées P fois grâce à un dispositif de recopie (non représenté), sont successivement adressées à un sommateur 19 pour être additionnées aux valeurs de luminance du lignage vertical synthétisé adressées successivement au même sommateur 19. Après stockage dans une mémoire de synthèse 20, les valeurs additionnées du lignage synthétisé sont ensuite adressées, par bandeau successif de n lignes, au soustracteur 16 pour être soustraites des valeurs de luminance de l'image initiale telle qu'échantillonnée et numérisée sur n lignes par l'échantillonneur 6.

L'invention n'est pas limitée aux exemples de réalisation décrits et représentés. En particulier :

– le lieu d'implantation du dispositif de correction présenté sous forme de carte de délignage est adapté à la structure de la caméra : il se situe au niveau du boîtier électronique de la caméra contenant déjà la carte de contrôle, les cartes voies et les cartes vidéo. Le signal de correction, après conversion analogique, peut également agir au niveau de la tête d'analyse afin d'éviter les problèmes de saturation des signaux analogiques.

– l'invention n'est pas limitée au délignage décrit, composé d'un délignage horizontal périodique et d'un délignage vertical : il suffit de déterminer une nouvelle base de délignage ($f^{(k)}$) pour modéliser et synthétiser tout type de lignage.

– l'invention s'applique à un traitement en temps réel : pour améliorer ses performances, il est possible d'utiliser un circuit VLSI (circuit intégré à très grande échelle) à la place du processeur de signal.

## Revendications

1. Procédé de correction de lignage d'images issues d'un capteur provoquant un bruit périodique, le défaut de lignage résultant de l'analyse de l'image par bandeaux de n lignes au moyen d'un détecteur matriciel et provoquant sur l'image l'apparition de zones où, en chaque pixel, les valeurs de luminance dues au défaut se superposent aux valeurs de luminance de l'image, l'ensemble de ces zones constituant un espace de lignage, le procédé étant caractérisé en ce qu'il comprend les étapes suivantes :
   – détermination de l'espace de lignage par identification des valeurs de luminance du lignage aux valeurs prises par les fonctions polynômiales d'un espace vectoriel de fonctions générées par une base de fonctions décorrélées et normées,
   – modélisation du lignage sur cet espace de polynômes en déterminant les coefficients de répartition du lignage sur chaque fonction de la base à partir des valeurs de luminance de l'image et des valeurs des fonctions de la base,
   – synthèse du lignage en déterminant les valeurs de luminance du lignage à partir des coefficients de corrélation et des valeurs des fonctions de la base, et soustraction du lignage synthétisé de l'image initiale par soustraction des valeurs de luminance de l'image initiale.

2. Procédé de délignage selon la revendication 1 appliqué au délignage horizontal, caractérisé en ce qu'il comprend les étapes suivantes :
   – accumulation des valeurs de luminance de P bandeaux de n lignes de l'image dans un seul bandeau de n lignes.
   – détermination d'un espace de lignage horizontal par détermination d'une base de lignage horizontal de fonctions normées et décorrélées entre elles sur chacun des j points d'une ligne d'image condensée, j variant de 1 à Q.
   – modélisation du lignage horizontal sur cet espace par détermination des coefficients de corrélation du modèle sur chaque fonction de la base de lignage horizontal, pour chaque ligne i, i variant de 1 à n, chacun de ces coefficients étant égal à la moyenne des valeurs de luminance en chaque point de la ligne i de l'image condensée rapportées aux valeurs prises par la fonction de base considérée en ce point, diminuée de la moyenne des valeurs de luminance de l'image prises sur l'ensemble des n lignes et rapportées aux valeurs de la fonction de base considérée, les coefficients devant être divisés par P pour être exploités dans l'étape suivante.
   – synthèse du lignage horizontal sur l'espace de lignage horizontal par détermination des valeurs de luminance de chaque point du lignage horizontal, chacune de ces valeurs de luminance étant égale à la somme des produits des coefficients de corrélation en ce point sur une fonction donnée par la valeur de cette fonction en ce point.
   – soustraction de l'image de lignage horizontal ainsi synthétisée de l'image initiale.

3. Procédé de délignage selon les revendications 1 et 2 appliqué au délignage horizontal et vertical, caractérisé en ce qu'il comprend les étapes suivantes :
   – mémorisation des valeurs de luminance de P bandeaux de l'image complète d'une part, et accumulation de ces valeurs sur un bandeau de n lignes d'autre part.
   – détermination d'un espace de lignage composé d'un espace de lignage horizontal et d'un espace de lignage vertical, le premier étant généré par la base de lignage horizontal selon la revendication 2 et le second généré par une base de lignage vertical de fonctions normées et décorrélées entre elles sur chaque point i modulo n d'une colonne d'image.
   – modélisation du lignage horizontal selon la revendication 2 et modélisation du lignage vertical sur l'espace de lignage vertical par détermination des coefficients de corrélation du modèle sur chaque fonction de la base de lignage vertical, pour chaque colonne j, j variant de 1 à Q, chaque coefficient étant égal à la moyenne des valeurs de luminance en chacun des nP points modulo n de la colonne j rapportées aux valeurs prises par la fonction de base en ce point, diminuée de la moyenne des valeurs de luminance de l'image prises sur l'ensemble des Q colonnes pour chacun des nP points modulo n et rapportées aux valeurs de la fonction de base correspondante.
   – synthèse du lignage horizontal selon la revendication 2 et système du lignage vertical sur l'espace de lignage vertical par détermination des valeurs de luminance de chaque point du lignage vertical, chacune de ces valeurs de luminance étant égale à la somme des produits des coefficients de corrélation en ce point sur une fonction de base de lignage vertical décorrélée en ce point par la valeur de cette fonction en ce point.
   – soustraction de l'image de délignage horizontal et de l'image de délignage vertical ainsi synthétisées de l'image initiale.

4. Dispositif de délignage d'une image de caméra, notamment de caméra thermique, destiné à la mise en oeuvre du procédé selon la revendication 1, caractérisé en ce qu'il comporte des moyens (12) pour déterminer une base de fonctions orthonormées génératrice d'un espace de lignage, des moyens (6,11,13,13',14,14',17)) pour modéliser le lignage sur cet espace et des moyens (14,14',15,15',16,18,19) pour synthétiser et soustraire l'image de lignage synsthétisée de l'image initiale.

5. Dispositif de délignage selon la revendication 4 appliqué au délignage horizontal caractérisé en ce qu'il comporte un échantillonneur-codeur de signal (6) dont les valeurs numérisées sont adressées à un accumulateur d'image sur n lignes (10) couplé à une mémoire d'accumulateur (11), un processeur de signal (12) pour déterminer les fonctions de base de l'espace de lignage horizontal et pour combiner les valeurs de ces fonctions, stockées dans une mémoire (13), aux valeurs de luminance stockées dans la mémoire (11) de façon à déterminer les coefficients de corrélation du modèle de lignage horizontal mémorisés dans une mémoire (14), une mémoire (15) pour stocker les valeurs de luminance d'une synthèse de lignage horizontal déterminées par le processeur (12) par adressage des mémoires (13,14), et un soustracteur (16) pour soustraire de manière synchronisée la valeur de luminance d'un point du lignage horizontal synthétisé de la valeur de luminance de l'image au même point.

6. Dispositif de délignage selon la revendication 4 appliqué au délignage complet, horizontal et vertical, caractérisé en ce qu'il comporte une mémoire d'image (17) pour contenir l'ensemble des valeurs de luminance d'une image adressée par l'échantillonneur-codeur (6), ces valeurs de luminance étant démultiplexées pour créer deux voies d'adressage, une voie de délignage horizontal par une chaîne de traitement selon la revendication 5 (15), une voie de délignage vertical, comprenant une mémoire (13') de stockage des fonctions de base du délignage vertical détermines par le processeur (12), une mémoire (14') de stockage des coefficients de corrélation du modèle de lignage vertical déterminés par le processeur (12) par adressage séquentiel des valeurs de luminance de la mémoire (14), un sommateur (19) pour additionner par adressage parallèle des valeurs de luminance du lignage vertical synthétisé, déterminées par le processeur (12) par adressage séquentiel des coefficients stockés dans la mémoire (14') et des valeurs des fonctions stockées dans la mémoire (13'), et des valeurs de luminance du lignage horizontal synthétisé recopiées dans un dispositif de recopie, une mémoire de synthèse (20) de stockage des valeurs de luminance des lignages horizontal et vertical additionnées dans le sommateur (19), et un soustracteur (16) pour soustraire, par adressage successif de bandeaux de n lignes de valeurs provenant de la mémoire (20), les valeurs de luminance du lignage synthétisé des valeurs de luminance de l'image initiale échantillonnées et numérisées sur n lignes par l'échantillonneur (6).

FIG.1

FIG.2

FIG.3

Signal Vidéo

Décodeur — 20

Soustracteur — 16

Mémoire de synthèse H — 15

Mémoire de fonctions H — 13

Processeur — 12

Mémoire de modèle H — 14

Accumulateur — 10

Mémoire d'accumulateur — 11

Echantillonneur Codeur — 6

FIG.4

FIG.5

EP 0 457 639 A1

EP 0 457 639 A1

**Office européen des brevets**

# RAPPORT DE RECHERCHE EUROPEENNE

Numero de la demande

EP 91 40 1147

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PROCEEDINGS OF THE IEEE INTERNATIONAL CONFERENCE ON ACOUSTICS, SPEECH & SIGNAL PROCEESING (ICASSP'85), Tampa, Florida, 26-29 mars 1982, vol. 2, pages 684-687, IEEE, New York, US; K.M. TAO et al.: "Adaptive noise cancelling applied to image restoration" * Page 684, colonne de gauche, lignes 3-15,42-52, colonne de droite, lignes 33-50; page 685, colonne de gauche, lignes 1-32 * --- | 1-4 | G 06 F 15/68 |
| A | COMPUTER GRAPHICS & IMAGE PROCESSING, vol. 16, no. 3, juillet 1981, pages 287-295, New York, US; V.R. ALGAZI et al.: "Radiometric equalization of nonperiodic striping in satellite data" * Paragraphe 1: "Models of radiometric errors"; paragraphe 2: "Periodic striping" * ----- | 1-4 | |
| | | | **DOMAINES TECHNIQUES RECHERCHES (Int. Cl.5)** |
| | | | G 06 F 15/68 |

Le présent rapport a été établi pour toutes les revendications

| Lieu de la recherche | Date d'achèvement de la recherche | Examinateur |
|---|---|---|
| LA HAYE | 14-06-1991 | GONZALEZ ORDONEZ O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)